## Europäisches Patentamt
## European Patent Office
## Office européen des brevets

(11) Veröffentlichungsnummer: **0 040 266**
**A1**

(12) # EUROPÄISCHE PATENTANMELDUNG

(21) Anmeldenummer: **80200460.6**

(22) Anmeldetag: **19.05.80**

(51) Int. Cl.³: **H 01 R 39/14**
**H 02 K 9/28**

(43) Veröffentlichungstag der Anmeldung:
**25.11.81 Patentblatt 81/47**

(84) Benannte Vertragsstaaten:
**AT BE CH DE FR GB IT LI LU NL SE**

(71) Anmelder: **BBC Brown, Boveri & Cie.**
**(Aktiengesellschaft)**

**CH-5401 Baden(CH)**

(72) Erfinder: **Zerlik, Willibald**
**Weihermattstrasse 389**
**CH-5242 Birr AG(CH)**

(72) Erfinder: **Ziegler, Herwin**
**Ringstrasse**
**CH-5415 Nussbaumen AG(CH)** .

(54) **Schleifringanordnung für elektrische Maschinen.**

(57) Bei unmittelbar oder unter Zwischenschaltung eines Zwischenschrumpfrings aufgeschrumpften Schleifringen elektrischer Maschinen können Verformungen der in der Regel hohlen Schleifringwelle auftreten. Durch isolierte Befestigung des Schleifrings (8) an nur einem Ende an einem Tragteil (3), vorzugsweise der Nabe des Schleifringventilators (2), wird der Schleifring (8) von der Welle (1) elektrisch und thermisch entkoppelt.

FIG.1

EP 0 040 266 A1

0040266

50/80
He/eh

- 1 -

## Schleifringanordnung für elektrische Maschinen

Die Erfindung bezieht sich auf eine Schleifringanordnung für elektrische Maschinen mit auf der Schleifringwelle mittelbar und von dieser elektrisch isoliert befestigten Schleifringen.

Schleifringe für elektrische Maschinen, insbesondere solche, für grosse Synchronmaschinen, werden entweder isoliert auf eine Schleifringbüchse oder isoliert direkt auf die Welle aufgeschrumpft. Als Isolation wird in der Regel Pressmica verwendet. Zur Erzielung eines ausreichenden Kriechweges wird die Isolation und der Schleifring stirnseitig noch mit gut haftendem, zähem Lack gestrichen. Der Schleifring wird beim Aufziehen auf etwa $500^{\circ}$ C erwärmt und presst beim Erkalten zunächst die Isolationsschicht zusammen, wobei er sich reckt und automatisch ein Restschrumpfmass entsprechend $200^{\circ}$ C, also etwa 2 ‰ erhält. Bei grossen Schleifringen wird zunächst die Isolationsschicht durch einen Vorschrumpfring mit etwa 3,5 ‰ Schrumpf über die Isolation auf die Welle aufgeschrumpft, dann wird dieser Schrumpfring abgedreht und der Schleifring mit etwa 2 ‰ Schrumpfmass auf den Vorschrumpfring aufgeschrumpft (vgl. Buch "Konstruktion elektrischer Maschinen" von E. Wiedemann und W. Kellenberger, Springer-Verlag Berlin/Heidelberg/New York, 1967, S.389-393,
insbesondere S.392).

Bei elektrischen Maschinen, insbesondere Synchronmaschinen,
wird die Schleifringzuleitung durch eine zentrale Wellenbohrung geführt. Im schleifringseitigen Abschnitt ist der Aussendurchmesser dieses Wellenabschnittes (Schleifringwelle)
und demzufolge auch der um die Bohrung verminderte Wellenquerschnitt vergleichsweise klein.

Infolge des grossen Schrumpfes und des kleinen Wellenquerschnitts kann sich bereits bei geringen Ungleichmässigkeiten in der Isolation die Schleifringwelle beim Aufschrumpfen der Schleifringe verkrümmen. Eine weitere Ursache für
eine Verkrümmung der Schleifringwelle ist darin zu sehen,
dass sich die Schleifringe im Betrieb ungleichmässig erwärmen. Dadurch und infolge der Fliehkräfte verkleinen sich
die Schrumpfkräfte auch ungleichmässig, und die Welle wird
im Betrieb eine andere Form annehmen als im kalten Zustand.

Es ist Aufgabe der Erfindung, eine Schleifringanordnung
für elektrische Maschinen zu schaffen, welche die vorstehenden Unzulänglichkeiten nicht aufweist und bei der der
Schleifring mechanisch und thermisch von der zugehörigen
Schleifringwelle entkoppelt ist.

Diese Aufgabe wird bei einer Schleifringanordnung der eingangs genannten Gattung dadurch gelöst, dass der Schleifring an einem Ende mit einer Befestigungsvorrichtung versehen und nur an diesem Ende unter Zwischenschaltung eines
Isoliergliedes axial an einem fest mit der Welle verbundenem
Tragteil befestigt ist.

Die Erfindungsgemässe Schleifringanordnung mit freiliegendem Schleifring vermindert die Gefahr des Wellenverkrümmens
in erheblichem Masse. Die axiale Isolation zwischen Schleif-

ring und Tragteil wirkt in elektrischer und thermischer Hinsicht. Sie verhindert das ungleichmässige Erwärmen und das damit einhergehende ungleichmässige Verkleinern der Haltekraft des Tragteils. Diese Eigenschaft ist insbesondere dann von Bedeutung, wenn gemäss Anspruch 2 der Tragteil unmittelbar, d.h. ohne Zwischenschaltung einer Isolation, auf der Schleifringwelle befestigt, vorzugsweise aufgeschrumpft ist.

Der Tragteil kann als eigenständiges Bauteil ausgeführt sein. Zur Erzielung einer kurzen axialen Baulänge der Schleifringanordnung ist es jedoch zweckmässig, die Nabe des ohnehin vorhandenen Schleifringventilators als Tragteil für den oder die Schleifringe auszubilden (Anspruch 3).

Zur Zentrierung des Schleifrings gegenüber der Schleifringwelle bzw. dem mit ihr fest verbundenen Tragteil ist gemäss Anspruch 4 das Isolierglied selbst als Zentrierglied ausgebildet. Nach einer im Anspruch 5 aufgeführten bevorzugten Ausführungsform weist das Isolierglied zu diesem Zweck im schleifringwellennahen Bereich einen ersten Bund auf, der in eine ringförmige Ausnehmung im Tragteil formschlüssig eingreift. Auf der dem Tragteil zugewandten Seite des Isoliergliedes ist radial aussen ein zweiter Bund vorgesehen, gegen den sich der Aussenumfang der Befestigungsvorrichtung abstützt. Zur Sicherung der relativen Lage zwischen Tragteil und Schleifring in Umfangsrichtung sind zwei oder mehrere, über den Umfang verteilte Zentrierstifte aus Isoliermaterial vorgesehen, welche sowohl in den Tragteil als auch in der Befestigungsvorrichtung kraftschlüssig eingepasst sind (Anspruch 6). Die Verbindung zwischen Tragteil und Schleifring erfolgt in axialer Richtung durch isolierte Bolzen. Auf diese Weise werden die Zentrierung des Schleifrings zum Tragteil, die Sicherung gegen Umfangskräfte und die (axiale) Befestigung des Schleifrings am Tragteil auf unterschiedliche Bauelemente verteilt, welche jeweils entsprechend ihren Aufgaben ausgelegt werden könen.

Durch Einsatz kraftschlüssig in Tragteil und Befestigungsvorrichtung des Schleifrings eingepasster Isolierrohre, durch
welche Befestigungsbolzen kleineren Aussendurchmessers gesteckt sind, lassen sich separate Zentrierstifte entbehren;
Sicherung gegen Relativbewegungen in Umfangsrichtung und
(axiale) Befestigung werden im selben Bauelement vereinigt
(Anspruch 7).

Gemäss einer in Anspruch 8 aufgeführten Ausgestaltung des
Erfindungsgegenstandes übernehmen isolierte Befestigungsbolzen in Verbindung mit mehreren, gleichmässig über den
Umfang verteilten Zentrierstiften aus Isoliermaterial, welche sowohl im Tragteil als auch in der Befestigungsvorrichtung des Schleifrings kraftschlüssig eingepasst sind, die
Zentrierung des Schleifrings, die Sicherung gegen Relativbewegungen in Umfangsrichtung und die axiale Befestigung.
Wie oben angegeben, können auch hier die (separaten) Zentrierstifte entfallen, wenn Isolierrohre in die entsprechend
erweiterten Bolzenbohrungen kraftschlüssig eingepasst sind
(Anspruch 9). In den beiden letztgenannten Fällen kann das
Isolierglied als einfache Kreisringscheibe ausgebildet
werden.

Damit die Schrumpfspannung möglichst gleichmässig auf die
Schleifringwelle wirkt, ist der Tragteil gemäss Anspruch 10
mit Mitteln zur hydraulischen Entspannung des Sitzes zwischen Tragteil und Schleifringwelle versehen.

Die Erfindung wird nachstehend anhand von in der Zeichnung
dargestellten Ausführungsbeispielen näher erläutert.

In der Zeichnung zeigt

Fig. 1  eine erste Ausführungsform einer Schleifringanord-

0040266

nung mit einem als Zentrierglied ausgebildeten Isolierglied,

Fig. 2   einen Radialschnitt durch die Nabenpartie der Schleifringanordnung gemäss Fig. 1 längs deren Linie AA,

Fig. 3   eine zweite Ausführungsform einer Schleifringanordnung, bei welcher der Schleifring mittels kraftschlüssig eingepasster Isolierrohre und durch diese
hindurchgesteckter Bolzen am Tragteil isoliert befestigt und gegenüber diesem zentriert und in Umfangsrichtung fixiert ist.

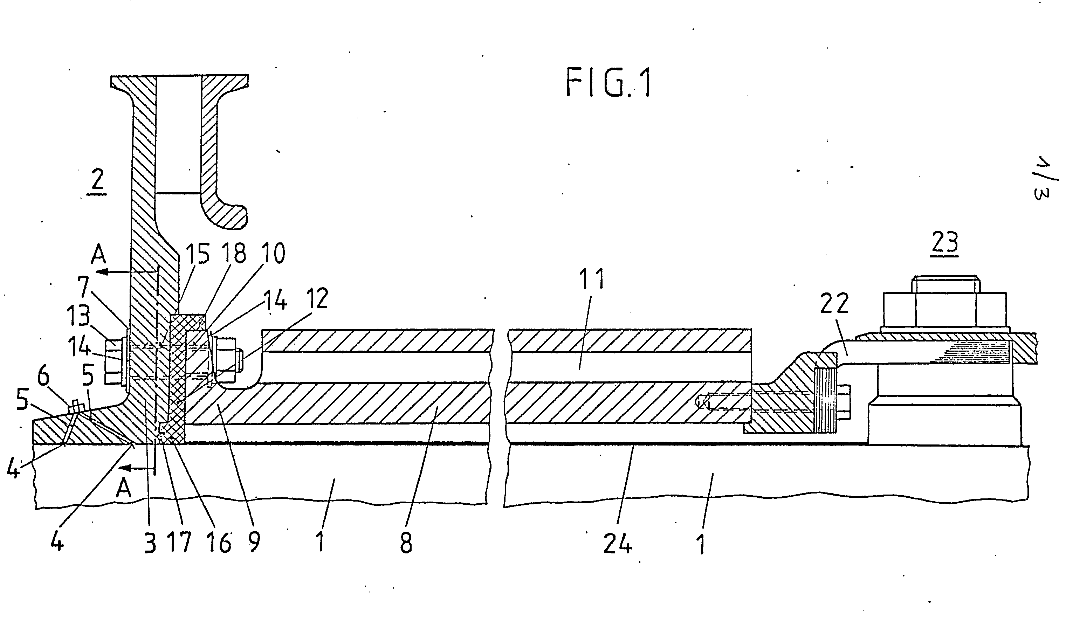

In Fig. 1 ist auf eine hohle Schleifringwelle 1 ein Schleifringventilator 2, dessen Nabe mit 3 bezeichnet ist, aufgeschrumpft. Die Innenwandung der Nabenbohrung ist mit umlaufenden Nuten 4 versehen, die über Kanäle 5 mit einem
Drucköanschluss 6 in Verbindung stehen. Durch Einpressen
von Drucköl in die Nuten 4 lässt sich die Schrumpfverbindung
zwischen Nabe 3 und Schleifringwelle 1 nach dem Aufschrumpfen
hydraulisch entspannen. Die Ventilatornabe 3 ist mit einer
Reihe von axialen Bohrungen 7 versehen. Ein generell mit der
Bezugsziffer 8 bezeichneter Schleifring ist am ventilatorseitigen Ende mit einer flanschartigen Befestigungsvorrichtung 9 versehen, welche axial verlaufende und mit den Bohrungen 7 in der Nabe 3 fluchtende Bohrungen 10 aufweist.
Diese Bohrungen setzten sich im eigentlichen Schleifringkörper in Form von Kühlluftbohrungen 11 fort. Der Schleifring 8 ist unter Zwischenschaltung eines Zentriergliedes 12
an der Nabe 3 des Ventilators 2 über Metallbolzen 13, welche durch Isolierscheiben 14 und eine den Bolzenschaft umgebende Isolierhülse 15 isoliert sind, befestigt. Das Zentrierglied besteht aus Isoliermaterial, z.B. Schichtpressstoff, und weist im schleifringwellennahen Abschnitt einen Innenbund 16 auf, der in eine ringförmige Ausnehmung 17

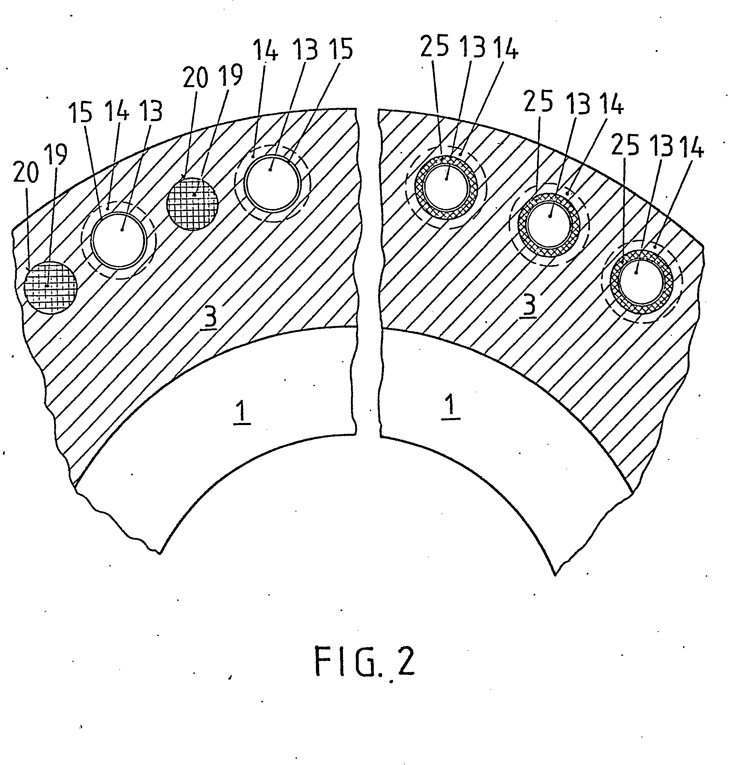

in der Ventilatornabe 3 eingreift. Die der Ventilatornabe 3 abgewandte Fläche des Zentriergliedes 12 weist einen Aussenbund 18 auf, dessen Innendurchmesser dem Aussendurchmesser des zugehörigen Schleifringendes (Befestigungsvorrichtung 9) entspricht. In Umfangsrichtung erfolgt die Fixierung des Schleifrings 8 durch eine Mehrzahl kraftschlüssig eingepasster Zentrierstifte 19 aus Isoliermaterial, welche in eintsprechende, miteinander fluchtende Bohrungen 20 in der Ventilatornabe 3 bzw. der Befestigungsvorrichtung 9 des Schleifrings 8 eingebracht sind (Fig. 2, linke Hälfte - dort ist nur die Bohrung 20 in der Ventilatornabe dargestellt).

Das freie Ende des Schleifrings 8 ist über eine flexible Leitung 22 aus aufeinandergeschichteten dünnen Kupferbändern oder aus Kupferlitze elektrisch mit einem Schleifringbolzen 23, der in an sich bekannter Weise in der Schleifringwelle 1 isoliert befestigt ist, verbunden. Das in der Wellenbohrung liegende Ende des Schleifringbolzens ist in ebenfalls bekannter Weise mit einer weiter nicht dargestellten Erregerzuleitung verbunden.

Aus Sicherheitsgründen ist der Abschnitt der Schleifringwelle 1 zwischen Ventilatornabe 3 und Schleifringbolzen 23 durch eine Isolierbandage 24 abgedeckt.

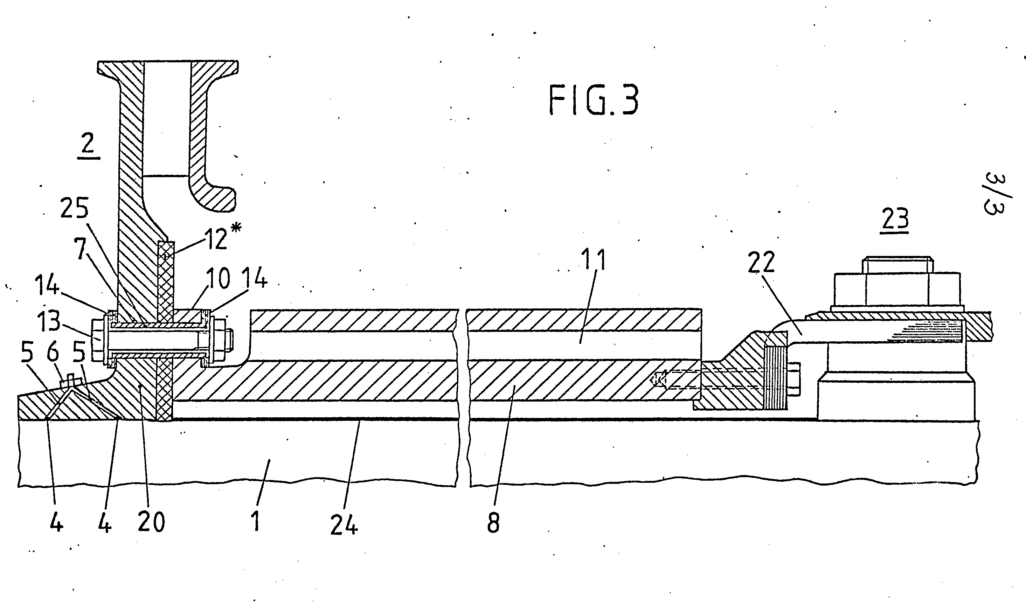

Bei der in Fig. 3 bzw. Fig. 2, rechte Hälfte dargestellten alternativen Ausführungsform, in der gleiche Teile mit denselben Bezugszeichen versehen sind wie in Fig.1 und 2, erfolgt die Zentrierung und Fixierung des Schleifrings 8 gegenüber der Ventilatornabe 3 durch Isolierrohre 25. Diese durchsetzen die Bohrungen 7 und 10 in der Ventilatornabe 3 bzw. in der flanschartigen Befestigungsvorrichtung 9 des Schleifrings 8 und sind in diese Bohrungen kraftschlüssig eingepasst. In die Isolierrohre 25 sind Bolzen 13 mit einem kleineren Schaftdurchmesser als die lichte Weite der Isolierrohre 25 eingesetzt. Die Bolzen 13 sind analog zu Fig. 1 durch Isolierscheiben 14 stirnseitig isoliert. Die Isolierrohre 25 übernehmen zusammen mit den Bolzen 13 die Zentierung des Schleifrings, dessen Fixierung in Umfangsrichtung und die (axiale) Befestigung des Schleifrings 8 an der Ventilatornabe 3.

In Analogie zur Ausgestaltung des Erfindungsgegenstandes nach Fig. 1 kann die Zentrierung und Fixierung des Schleifrings 8 auch im Falle der Ausführung nach Fig. 3 auch durch separate Zentrierstifte 19 erfolgen, wie es in Fig. 2, linke Hälfte, veranschaulicht ist. Bei beiden Alternativen kann das Isolierglied 12 dann als einfache Kreisringscheibe 12* ausgebildet sein.

Der Erfindungsgegenstand ist selbstverständlich auf das in der Zeichnung Dargestellte nicht beschränkt. So kann die Fixierung von Tragteil und Schleifring in Umfangsrichtung auch bei der in Fig. 1 dargestellten Schleifringanordnung statt mit Zentrierstiften 19 aus Isoliermaterial analog zur Ausführungsform nach Fig. 3 bzw. zur rechten Hälfte der Fig. 2 erfolgen, wo die kraftschlüssig eingepassten Isolierrohre 25 diese Aufgabe erfüllen.

Bezugszeichenliste

1 - hohle Schleifringwelle

2 - Schleifringventilator

3 - Ventilatornabe

4 - umlaufende Nuten in der Nabenbohrung

5 - Kanäle in der Nabe 3

6 - Drucköolanschluss

7 - axiale Nabenbohrungen

8 - Schleifring

9 - Befestigungsvorrichtung des Schleifrings 8

10 - axiale Bohrungen der Befestigungsvorrichtung

11 - Kühlluftbohrungen im Schleifring 8

12 - Zentrierglied

12*- Kreisringscheibe

13 - Bolzen

14 - Isolierscheibe

15 - Isolierhülse

16 - Innenbund des Zentriergliedes 12

17 - ringförmige Ausnehmung in der Ventilatornabe 3

18 - Aussenbund des Zentriergliedes 12

19 - Zentrierstifte aus Isoliermaterial

20 - Zentrierstiftbohrung in der Ventilatornabe 3

22 - flexible Schleifringzuleitung

23 - Schleifringbolzen

24 - Isolierbandage

25 - Isolierrohr

Patentansprüche

1. Schleifringanordnung für elektrische Maschinen mit auf der Schleifringwelle (1) mittelbar und von dieser elektrisch isoliert befestigtem Schleifring (8), dadurch gekennzeichnet, dass der Schleifring (8) an einem Ende mit einer Befestigungsvorrichtung (9) versehen und nur an diesem Ende unter Zwischenschaltung eines Isoliergliedes (12, 12*) axial an einem fest mit der Welle (1) verbundenem Tragteil (3) befestigt ist.

2. Schleifringanordnung nach Anspruch 1, dadurch gekennzeichnet, dass der Tragteil (3) unmittelbar auf der Schleifringwelle (1), befestigt, vorzugsweise aufgeschrumpft ist.

3. Schleifringanordnung nach Anspruch 2, dadurch gekennzeichnet, dass dem Schleifring (8) ein Schleifringventilator (2) zugeordnet ist, dessen Nabe (3) als Tragteil ausgebildet ist.

4. Schleifringanordnung nach einem der Ansprüche 1 bis 3, dadurch gekennzeichnet, dass das Isolierglied als Zentrierglied (12) ausgebildet ist.

5. Schleifringanordnung nach Anspruch 4, dadurch gekennzeichnet, dass das Zentrierglied im wellennahen Bereich einen ersten Bund (16) aufweist, der in eine ringförmige Ausnehmung (17) in der Ventilatornabe (3) formschlüssig eingreift, und dass auf der dem Tragteil (3) abgewandten Fläche das Zentrierglied (12) mit einem zweiten Bund (18) versehen ist, gegen den sich der Aussenumfang der Befestigungsvorrichtung (9) abstützt.

6. Schleifringanordnung nach Anspruch 5, dadurch gekennzeichnet, dass zur Fixierung des Schleifrings (8) in Umfangsrichtung über den Umfang der Befestigungsvorrichtung
(9) verteilte, kraftschlüssig in Tragteil und Befestigungsvorrichtung eingepasste Zentrierstifte (19) aus Isoliermaterial vorgesehen sind, während die axiale Befestigung
des Schleifrings (8) am Tragteil durch isolierte Bolzen
(13) erfolgt.

7. Schleifringanordnung nach Anspruch 5, dadurch gekennzeichnet, dass zur Fixierung des Schleifrings (8) in Umfangsrichtung in den Tragteil (3) und die Befestigungsvorrichtung (9) des Schleifrings (8) kraftschlüssig eingepasste Isolierrohre (25) vorgesehen sind, durch die
Bolzen (13) mit kleinerem Schaftdurchmesser als die
lichte Weite der Isolierrohre (25) gesteckt sind, welche
zur axialen Befestigung des Schleifrings (8) am Tragteil
(3) dienen.

8. Schleifringanordnung nach einem der Ansprüche 1 bis 3,
dadurch gekennzeichnet, dass die Zentrierung des Schleifrings (8) und dessen Fixierung in Umfangsrichtung durch
mehrere, gleichmässig über den Umfang verteilte Zentrierstifte (19) aus Isoliermaterial erfolgt, welche sowohl im
Tragteil (3) als auch in der Befestigungsvorrichtung (9)
des Schleifrings (8) kraftschlüssig eingepasst sind, und
die axiale Befestigung des Schleifrings (8) am Tragteil
(3) unter Zwischenschaltung eines kreisringförmigen Isoliergliedes (12*) durch isolierte Bolzen (13) erfolgt.

9. Schleifringanordnung nach einem der Ansprüche 1 bis 3,
dadurch gekennzeichnet, dass die Zentierung des Schleifrings (8), dessen Fixierung in Umfangsrichtung und axiale
Befestigung am Tragteil (3) durch Isolierrohre (25), die
in miteinander fluchtende Bohrungen (7, 10) im Tragteil (3) bzw. in der Befestigungsvorrichtung (9) des Schleifrings (8) kraftschlüssig eingepasst sind, in Verbindung
mit durch die Isolierrohre (25) hindurchgesteckter Bolzen (13) mit einem Schaftdurchmesser kleiner als die
leichte Weite des Isolierrohrs (25) erfolgt, wobei zwischen dem Schleifring (8) und dem Tragteil (3) ein kreisringscheibenförmiges Isolierglied (12*) angeordnet ist.

10. Schleifringanordnung nach einem der Ansprüche 1 bis 9,
dadurch gekennzeichnet, dass Mittel (4, 5, 6) zur hydraulischen Entspannung des Sitzes zwischen Tragteil (3) und
der Schleifringwelle (1) vorgesehen sind.

# FIG.1

0040266

FIG. 2

# FIG.3

0040266

| | | 0040266 |
|---|---|---|

EUROPÄISCHER RECHERCHENBERICHT

Nummer der Anmeldung

P 80 20 0460

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der maßgeblichen Teile | betrifft Anspruch | H 01 R 39/14<br>H 02 K 9/28 |
| | <u>US - A - 1 404 871</u> (McCARTY)<br>* Seite 1, Zeilen 70-107 *<br><br>-- | 1,2,6,<br>7 | |
| | <u>US - A - 1 378 049</u> (MILLS)<br>* Seite 1, Zeilen 50-98 *<br><br>-- | 1,6,8,<br>9 | |
| | <u>US - A - 2 371 996</u> (HOLMGREN)<br>* Seite 1, rechte Spalte, Zeilen 10-51 *<br><br>-- | 1,6,8,<br>9 | **RECHERCHIERTE SACHGEBIETE (Int. Cl.³)** |
| | <u>CH - A - 90 568</u> (OERLIKON)<br>* Seite 1, rechte Spalte, Zeilen 7-12 *<br><br>-- | 3 | H 01 R 39/14<br>39/08<br>H 02 K 9/28 |
| | <u>DE - A - 2 833 129</u> (STEMMANN)<br>* Seite 9, Zeile 17 - Seite 10, Zeile 11; Figur 1 *<br><br>-- | 4,5 | |
| | <u>DE - A - 1 916 263</u> (ELEKTROGERATE)<br>* Seite 13, Zeile 2 - Seite 14, Zeile 7; Figur 3 *<br><br>-- | 7,9 | **KATEGORIE DER GENANNTEN DOKUMENTE** |
| A | <u>DE - A - 2 246 685</u> (SIEMENS)<br>* Seite 5, Zeilen 7-16 *<br><br>-- | 6-9 | X: von besonderer Bedeutung<br>A: technologischer Hintergrund<br>O: nichtschriftliche Offenbarung<br>P: Zwischenliteratur<br>T: der Erfindung zugrunde liegende Theorien oder Grundsätze<br>E: kollidierende Anmeldung<br>D: in der Anmeldung angeführtes Dokument<br>L: aus andern Gründen angeführtes Dokument |
| A | <u>US - A - 2 404 969</u> (LIDDINGTON)<br>* Spalte 2, Zeile 45 - Spalte 3, Zeile 19 * | 6-9 | |
| | | ./. | &: Mitglied der gleichen Patentfamilie, übereinstimmendes Dokument |

Der vorliegende Recherchenbericht wurde für alle Patentansprüche erstellt.

| Recherchenort | Abschlußdatum der Recherche | Prüfer |
|---|---|---|
| Den Haag | 15-01-1981 | RANDES |

EPA form 1503.1 06.78

**EUROPÄISCHER RECHERCHENBERICHT**

| | EINSCHLÄGIGE DOKUMENTE | | KLASSIFIKATION DER ANMELDUNG (Int. Cl.³) |
|---|---|---|---|
| Kategorie | Kennzeichnung des Dokuments mit Angabe, soweit erforderlich, der Maßgeblichen Teile | betrifft Anspruch | |
| A | <u>DE - C - 134 309</u> (WESTINGHOUSE) | | |
| A | <u>US - A - 1 756 004</u> (BARR) | | |
| A | <u>US - A - 2 209 335</u> (JUNGK) | | |
| A | <u>US - A - 1 431 295</u> (EVANS) | | |
| A | <u>DE - C - 473 746</u> (SIEMENS) | | |
| A | <u>DE - C - 306 128</u> (BROWN BOVERI) | | |

----

RECHERCHIERTE SACHGEBIETE (Int. Cl.³)

EPA Form 1503.2  06.78